# EUROPEAN PATENT APPLICATION

(11) **EP 0 971 327 A2**
(43) Date of publication of application: **12.01.2000**
(21) Application number: 99202130.3
(22) Date of filing: 01.07.1999
(51) Int. Cl.: G07F 19/00, G06F 17/60, H04M 17/00

(54) **Method and system for providing financial services such as home banking**

(30) Priority: 07.07.1998 US 92488 P
(71) Applicant: CITIBANK, N.A., New York, New York 10043 (US)
(72) Inventor: Lichstein, Henry, Santa Monica, California 90402 (US)
(74) Representative: Hynell, Magnus

(57) **Abstract**

A method and system of performing a transaction, such as a home banking transaction, for a user at a remote terminal that utilizes a server, such as a financial institution-controlled banking server, and a wireless communication link between the server and the remote terminal. The remote terminal includes, for example, a wireless communication device, such as a cell phone communication device coupled to an HTML renderer. The remote terminal also includes, for example, an input device, such as a keyboard or mouse, and a display device, such as a television set. Data, for example, for a banking transaction, is transmitted between the server and the remote terminal via a wireless communication facility, such as a second or third generation GSM (or a successor to third generation GSM) cell phone transmission facility. The data is received by the wireless communication device of the remote terminal and rendered by the HTML renderer, for example, as a user interface on the display device. The user enters information for the transaction at the remote terminal using, for example, the user interface and the input device.

## Description

### Cross Reference to Related Applications

This application claims the priority of applicant's co-pending U.S. Provisional Application Serial No. 60/092,488 filed July 7, 1998.

### Field of the Invention

The present invention relates generally to financial services, such as home banking, and more particularly to a method and system for providing financial services, such as home banking, to a user using cell phone infrastructure and a television set or similar display appliance.

### Background of the Invention

In the modem world, it is not unreasonable for a financial institution, such as a bank, to aspire to have as many as 1 billion or more customers in the near future. This is a very ambitious task, which requires serving whole new markets with new customers, and developing entirely new ways to deliver financial services. For example, a country such as China is a new market with many potential new customers. The immature infrastructure in countries such as China requires new ways to deliver services, if the financial institution is to establish a large retail presence. In order to establish such a retail presence, it is necessary for the financial institution to identify and develop technologies suitable for the unusual circumstances prevailing in countries such as China.

For example, the target market for consumer banking services in China comprises the emerging professional class in the coastal urban environment. It will exceed 350 million people by 2003, in 90-100 million family units. The financial institution may not want to invest in branches because of cost and time constraints, and it may be likely to be easier for a foreign bank to enter the China market with a technologically driven strategy. Home banking using a personal computer or the "PC over the 'phone'" paradigm will not work in a country such as China, because only about 35% of the target market will have access to wireline telephones in their homes by then, and no more than 10-15% will have PCs. The Internet will reach perhaps 25 million people in China by 2003, but the number of people with PCs, telephones, and access to the Internet will be quite small in relation to the total potential market for financial services.

The Cell Phone Banking approach, which uses the cell phone infrastructure to deliver financial services, assumes the cell phone screen can be a satisfactory home banking delivery environment. It also assumes that the consumer can bear the cost of a cell phone. However, the cell phone screen provides a relatively poor display for home banking purposes, and cell phones are relatively expensive. Additionally, in the home banking delivery environment there is no need for the portability of a cell phone, and no need for battery operation.

Other services allow a special set top box to be used to receive financial services in the home using a television set but they assume a wireline infrastructure, and some require a specialized server. They are designed for a different environment and satisfy a different need than delivery of financial services in a country like China.

### Summary of the Invention

It is a feature and advantage of the present invention to provide a method and system for furnishing financial services, such as home banking, which uses cellular technology involving digital transmission of data to a location such as the user's home and displays the data on the user's television set or similar display appliance.

It is a further feature and advantage of the present invention to provide a method and system for furnishing home banking and other financial services to a user located in an area where wired phone infrastructure or other means for wired connection to a network is either not available for any reason, or is relatively more expensive than the present invention.

It is an additional feature and advantage of the present invention to provide a method and system which makes use of a new type of set top box to deliver financial services, such as home banking, where cell phone infrastructure is available before line telephones are ubiquitous.

It is another feature and advantage of the present invention to provide a method and system for furnishing financial services, such as home banking, utilizing the new type of set top box which does not need to be portable or battery operated and eliminates the need for a more costly cell phone.

It is also a feature and advantage of the present invention to provide a method and system for delivering financial services, such as home banking, which provides a better display for home banking by utilizing the user's television set or other appliance as a display device for financial services, such as home banking.

It is still an additional feature and advantage of the present invention to provide a method and system for furnishing financial services, such as home banking, which places a lower load on the cell phone infrastructure.

It is still another feature and advantage of the present invention to provide a method and system for furnishing financial services, such as home banking, to a user in an environment where wireline phones are available but the cost of installation is high or a barrier to consumer acceptance of a wireline device.

It is a still further feature and advantage of the present invention to provide a method and system for furnishing financial services, which not only provides home banking capability, but which may also provides a more general web browsing capability.

To achieve the stated objects, advantages and novel features of the present invention, an embodiment of the invention provides a method and system of performing a transaction for a user at a remote terminal, which makes use, for example, of a server, such as a financial institution-controlled banking application server, and a wireless communication link between the server and the remote terminal. The remote terminal includes, for example, a wireless communication device, such as a wireless cell phone device, coupled to, for example, an HTML renderer, which in turn is coupled, for example, to a television set in the user's home. The HTML renderer can be housed in a set top box (STB), or the HTML renderer and the wireless communication device can be housed together in a stand-alone STB, or they can be incorporated in the television set or other display device. Further, the wireless communication device can be a standard cell phone. The remote terminal also includes, for example, an input device for the user linked to the wireless communication device, such as a keyboard, an infrared (IR)-driven keyboard, a mouse, an IR driven mouse, or the number pad of a standard cell phone.

In an embodiment of the present invention, a wireless communication link for transmitting data is established between the remote terminal and the server using a wireless communication facility, such as a cell phone transmission facility, which is coupled to the server. The cell phone transmission facility can be a second generation Global System for Mobile communication (GSM) cell phone transmission facility using, for example, Wireless Internet Protocol (IP), and preferably, the cell phone transmission facility can be a third generation GSM (or successor to third generation GSM) cell phone transmission facility using, for example, Wireless IP which is preferably connectionless. Alternatively, the data can be transmitted between the server and the remote terminal using a satellite system, such as a Low Earth Orbiting (LEO) satellite system or a GeoStationary satellite system, or a Wireless Local Loop (WiLL) system. The user can be authenticated at the remote terminal using, for example, a digital certificate on an application on the microprocessor of a smart card of the user. For this purpose, a smart card reader can be coupled to the wireless communication device of the remote terminal.

In an embodiment of the present invention, data is transmitted between the server and the remote terminal via the wireless communication facility. Data, for example, for a home banking transaction is transmitted from the banking application on the server to the remote terminal and received by the wireless communication device, which automatically sends the data to the HTML renderer. In turn, the HTML renderer automatically renders, for example, a user interface display for a banking transaction on the television set in a format, such as Phase Alternating Line (PAL) screen format, for the user. In response, for example, to prompts by the user interface display, the user enters information for a user transaction. The user enters the information using, for example, the input device of the remote terminal. The entered information is sent to the server by the wireless communication device of the remote terminal via the wireless communication facility coupled to the server. Thus, the user at the remote terminal interacts, for example, with the banking application on the server to perform a transaction, such as a home banking transaction.

Additional objects, advantages and novel features of the invention will be set forth in part in the description which follows, and in part will become more apparent to those skilled in the art upon examination of the following, or may be learned by practice of the invention.

### Brief Description of the Drawings

Fig. 1 is a flow chart that illustrates key components and the flow of information between key components utilizing a STB for an embodiment of the present invention;
Fig. 2 is a flow chart that illustrates key components and the flow of information between key components utilizing a stand-alone STB for an embodiment of the present invention;
Fig. 3 is a table that illustrates examples of cell phone infrastructure for an embodiment of the present invention;
Fig. 4 is a flow chart that illustrates key components and the flow of information between key components for performing a home banking transaction using the STB with a smart card for an embodiment of the present invention;
Fig. 5 is a flow chart that illustrates key components and the flow of information between key components for performing a home banking transaction using the stand-alone STB with a smart card for an embodiment of the present invention;
Fig. 6 is a graph that illustrates an example of a projection of likely distribution footprint of various telephone systems for an embodiment of the present invention;
Fig. 7 is a flow chart that amplifies the flow of information shown, for example, in Figs. 3 and 4 and provides further detail regarding the process of performing a home banking transaction for an embodiment of the present invention;
Fig. 8 is a table that illustrates examples of differences between other systems for remote delivery of financial institution home banking and the STB or stand-alone STB for an embodiment of the present invention; and
Fig. 9 is a diagram that illustrates a sample taxonomy of various delivery technologies for remote delivery of home banking for an embodiment of the present invention.

### Detailed Description

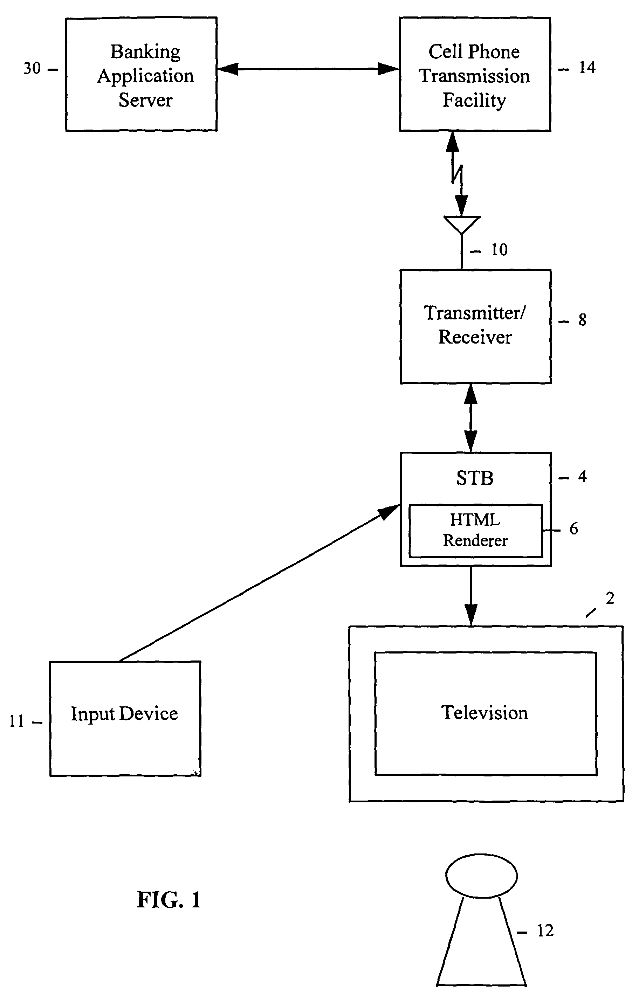

Referring now in detail to an embodiment of the invention, an example of which is illustrated in the accompanying drawings, an embodiment of the present invention utilizes a web browser based on a television that uses a cell phone-like connection, for example, for home banking or general access to the Internet browsing or the World Wide Web. Fig. 1 is a flow chart that illustrates key components and the flow of information between key components utilizing a STB for an embodiment of the present invention. An embodiment of the present invention makes use, for example, of a display device, such as a television set 2 connected to the STB 4, which is essentially an HTML renderer 6. The STB 4 is in turn connected to a wireless communication device 8, such as a cellular phone-like structure or components thereof, that has, for example, an antenna 10 for sending and receiving information. The cellular phone-like portion 8 transmits and receives data as a Wireless IP address does, and then sends received information, such as home banking or Internet data, to the HTML renderer 6 of the STB 4. The information is then displayed on the display device 2 so that the user 12 can, for example, perform home banking or view Internet pages on the television using, for example, input device 11, such as a mouse and/or a keyboard.

An advantage of an embodiment of the present invention is that if the user 12 is located in an area that lacks wired phone infrastructure or other means for wired connection to a network, the user can use cellular technology involving data transmission to accomplish the transmission of the data to the location of the television 2, such as within a house, and display the data on the television. The display device, such as the television 2, is connected to the STB 4, which has, for example, input device 11, such as a keyboard and/or a mouse. The STB 4 serves as an HTML renderer 6. Connected to the STB 4 is the communication device 8 having an antenna 10 for wirelessly transmitting and receiving data, such as data transmissions. Information from a network, such as a private network or the Internet, is transmitted using the cell phone infrastructure 14, to the communication device 8, and from the communication device to the STB 4, which then presents the information on the display device 2.

The system and method for an embodiment of the present invention provides a new type of STB 4 to deliver financial services, such as home banking, where cell phone infrastructure 14 has been rolled out before wireline telephones become ubiquitous. Such a situation exists in many countries, such as China, India, Mexico, Indonesia, and other countries where PCs are not broadly available. An embodiment of the present invention provides a distribution capability which takes advantage, for example, of two realities in countries, such as China. A first reality is that televisions are almost universally available, and a second reality is that a cell phone technology infrastructure is being installed at a rapid rate. An embodiment of the present invention makes use of data transmission, which is easily added to the cell phone infrastructure being installed today and certainly in the future. Essentially, the entire target market is in range of a cell phone base station and service provider in the reasonably near future.

An embodiment of the present invention takes advantage of the existence of the cell phone infrastructure, rather than of actual all phones. The method and system for an embodiment of the present invention makes use of the existence of the infrastructure, rather than the widespread ownership of cell phones. The cell phone infrastructure 14 is used to deliver financial services to the home, because it can distribute data very cheaply. The data delivered to a home are received, for example, in one of two ways. In one embodiment, as shown in Fig. 1, for example, a regular cell phone acts as the transmitter-receiver 8, and the STB 4 renders the page on the television 2. Another embodiment of the present invention has the functionality of the transmitter-receiver and the HTML renderer, for example, in a stand-alone STB.

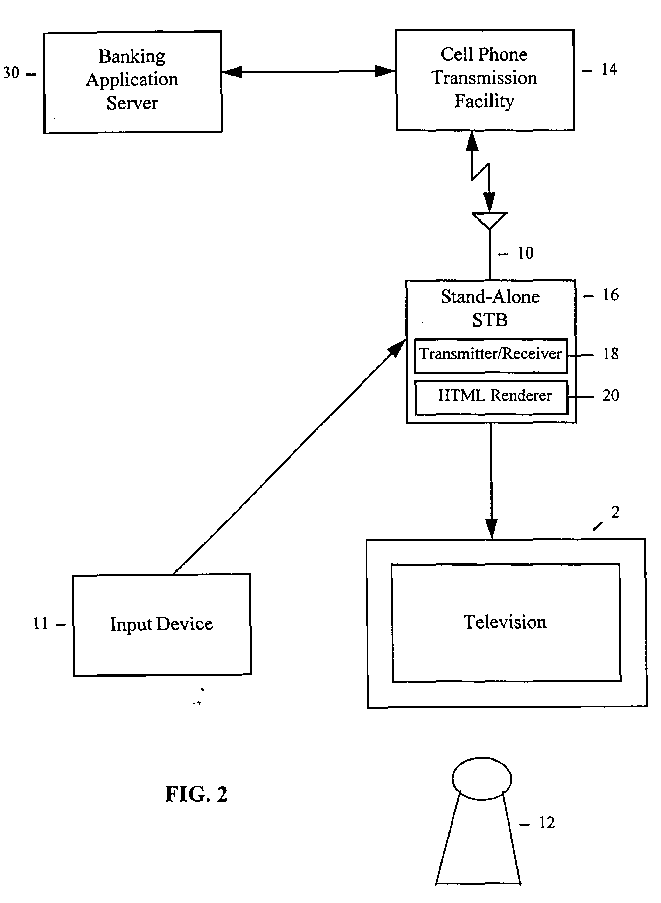

Fig. 2 is a flow chart that illustrates key components and the flow of information between key components utilizing a stand-alone STB for an embodiment of the present invention. Referring to Fig. 2, the stand-alone STB 16 includes a cell phone transmitter-receiver 18 as well as the page renderer 20. In either case, the electronic banking STB 4, 16 are a small, relatively inexpensive device. In an embodiment of the present invention, the STB 4, 16 provides home banking capability, but, as mentioned, can also provide a more general web browsing capability. Other revenue generating opportunities for the financial institution can also be provided by an embodiment of the present invention. In addition, an embodiment of the present invention can be used in an environment where wireline phones are available but the cost of installation is high or is a barrier to consumer acceptance of a wireline device.

An embodiment of the present invention provides a method and system that overcomes the limitations of telecommunications in countries such as China. An embodiment of the present invention utilizes the STB 4, 16 driven by the emerging cellular phone infrastructure buildout in a country such as China. China, for example, is the second most rapidly growing cell phone market in the world. Cell phone capacity is being added at the rate of about 15 million circuits a year. Half of the cell phones in the system are GSM now, and most of the new phones installed are GSM. In the near future, third generation cell phone technology will be introduced, most likely using digital Code Division of Multiple Access (CDMA) transmission technology in some form. In addition, observers predict a growing market for digital communications in emerging markets.

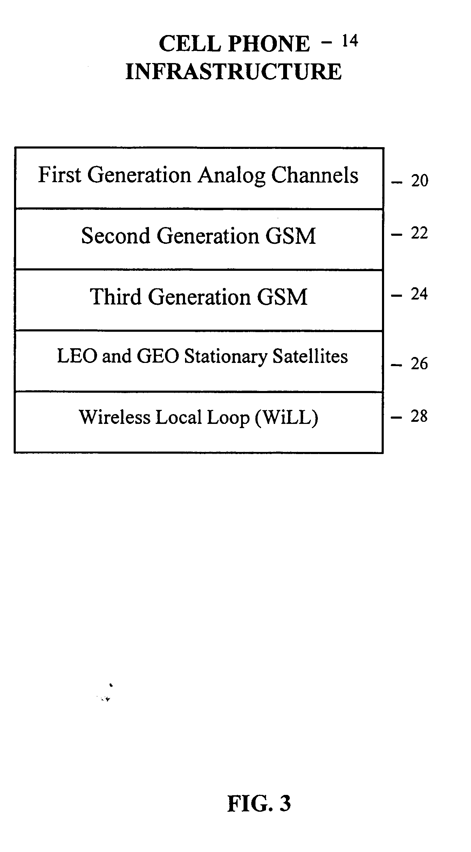

Meanwhile, there are many efforts in Europe and in the United States to allow Internet Protocol (IP) to be transmitted efficiently over the cell phone infrastructure. Fig. 3 is a table that illustrates examples of cell phone infrastructure for an embodiment of the present invention. Early versions of data transmission are available over first generation analog channels 20 used by the Advanced Mobile Phone Service (AMPS) voice protocol and second generation Time Division Multiple Access (TDMA) channels 22 used by the GSM protocols. The protocols are known under the names General Packet Radio System (GPRS) for packets, Universal Mobile Telecommunications System (UMTS) for broadband and the like. These are the transmission technologies used by products like Metricom, Nokia's Artus, and others. However, these technologies tie up a circuit full time to transmit data and are not cost-effective for delivering home banking. Third generation cell phone technologies will introduce Wireless IP 24, which will be connectionless. Wireless IP 24 presents a cost-effective infrastructure for home banking.

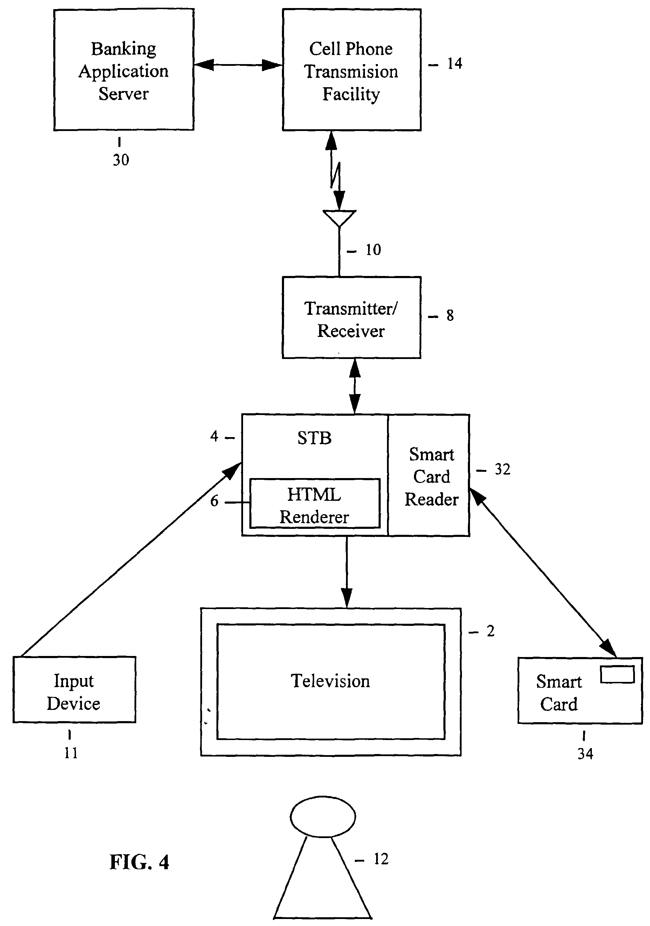

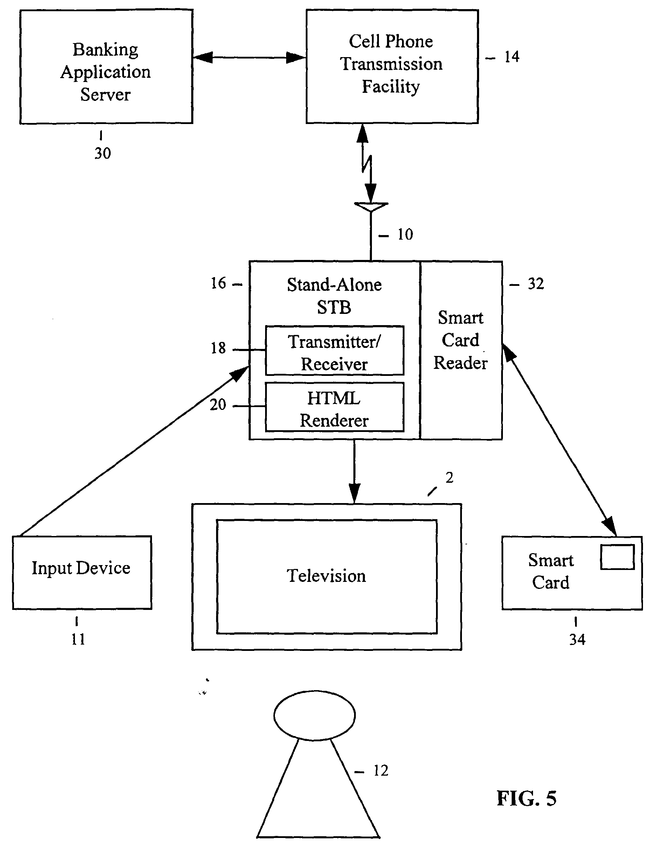

Fig. 4 is a flow chart which illustrates key components and the flow of information between key components for performing a home banking transaction using the STB 4 with a smart card for an embodiment of the present invention. Fig. 5 is a flow chart which illustrates key components and the flow of information between key components for performing a home banking transaction using the stand-alone STB with a smart card for an embodiment of the present invention. Referring to Figs. 4 and 5, an embodiment of the present invention makes use of the new form of STB 4 or stand-alone STB 16 to deliver a virtual bank in the home to the customer 12, for example, in China. The STB 4 or stand-alone STB 16 utilizes the cellular transmitter-receiver 8 or 18, respectively, to receive data. A financial institution electronic banking server 30 prepares the data. In an embodiment of the present invention, the STB 4 or stand-alone STB 16 includes, for example, a smart card reader 32, and each consumer user 12 has a smart card 24 with a digital certificate on the user's smart card. The identity of the STB 4 or stand-alone STB 16 is known, and the identity of the user 12 can be known from the smart card 34 with the digital certificate. The user 12 with the user's digital certificate on the smart card 34 can access the user's accounts anywhere the STB 4 or stand-alone STB 16 is available. Other embodiments of the present invention may allow data to be delivered without the need for smart cards or digital certificates.

Referring again to Fig. 3, in an interim period, while the third generation GSM 24 is in the process of being implemented in a particular country, the present second generation GSM 22 infrastructure capacity in any cell phone system can be used on a circuit or connected basis for an embodiment of the present invention. A concessionary pricing formula can be maintained during the introductory phase of the STB 4 or stand-alone STB 16 for an embodiment of the present invention, making it economically feasible pending the availability of the Wireless IP 24. In an embodiment of the present invention, other forms of broad coverage cell phone delivery such as LEO and GeoStationary satellites 26, and Wireless Local Loop (WiLL) or other data transmission protocols or techniques 28 can also be used. There will be a long time during which LEO satellites 26 will orbit over China and not be heavily used, during which time a LEO system, such as Teledesic can deliver home banking packets effectively.

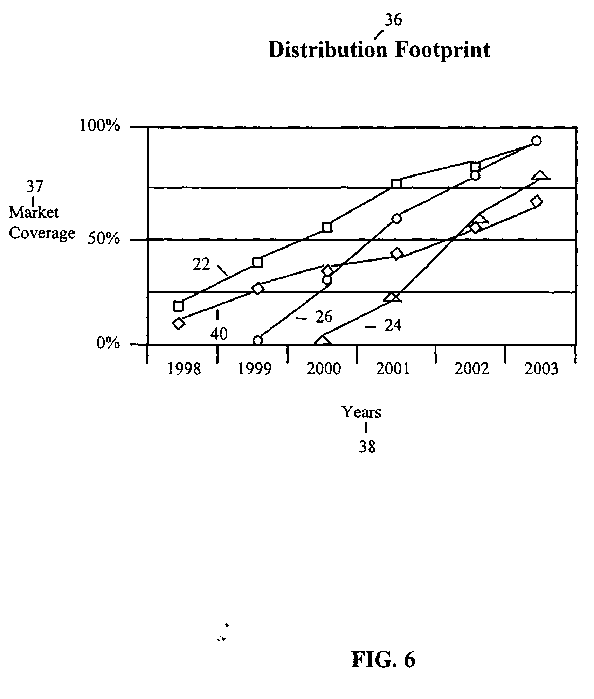

Fig. 6 is a graph that illustrates an example of a likely distribution profile 36 of various telephone systems. In Fig. 6, existing and projected market coverage 37 is plotted on the vertical axis as a function of years 38 from 1998 through 2003 on the horizontal axis. Existing and projected market coverage 37, as shown in Fig. 6, includes the coverage of the infrastructure, such as transmitters and base stations, which is the measure important to an embodiment of the present invention, rather than the availability of cell phones. For example, by the year 2003, it is anticipated that the market coverage of second generation GSM 22 and LEO 26 will reach approximately 90 percent, the market coverage of third generation GSM 24 will exceed 75 percent, while the market coverage of wireline 40 will be no more than approximately 60 percent. A reason for the importance of infrastructure coverage in an embodiment of the present invention is that as the infrastructure becomes available, the entire population covered by the footprint of the base stations is covered and can participate as customers, whether members of the population have cell phones or not.

Referring further to Fig. 2, in an embodiment of the present invention; the stand-alone form of the STB 16 is a complete device including a cell phone transmitter-receiver 18 and the HTML renderer 20, which includes, for example, a microprocessor able to parse electronic banking (E-Banking) HTML pages and the hardware and software necessary to render the pages on the television 2. A remote control with a number pad is the input device 11, or an IR-driven remote control keyboard can be added as an option. The stand-alone device 16 is a "bank in your home" device which does not require a cell phone to operate. It is expected that this device can be available in very large quantities at a relatively low cost.

Referring further to Fig. 1, in an embodiment of the present invention, alternatively, a standard cell phone can be used as the transmitter-receiver 8 for a hybrid form of the STB 4. Using a regular cell phone as the transmitter-receiver 8 allows the STB 4 itself to be even simpler and cheaper than the stand-alone STB 16. The hybrid STB 4 includes the HTML renderer 6 with HTML parser and page rendering functions, and the input device 11 can again be optional. The advantage of the hybrid device 4 is that the cell phone 8 can be used to handle parallel customer service voice calls. The cost of the hybrid STB 4 itself should be even less than the stand-alone STB 16.

The system and method for an embodiment of the present invention makes use of cost-efficient delivery of packets to the STB 4 or stand-alone STB 16. Using a distribution technology which requires a full-time cell phone circuit is unnecessarily expensive for use for delivering packets of digital information. An advantage of an embodiment of the present invention is the reduction in duty cycle of use of the cell phone infrastructure 14 used by the STB 4 or the stand-alone STB 16. The duty cycle of a connected circuit is much higher than that of Wireless IP delivery. The connection ties up a circuit (bandwidth) full time, while Wireless IP ties up the bandwidth for only as long as it takes to transmit the packet. The third generation cell phone technology 24 will provide Wireless IP as a low cost optional extra.

An embodiment of the present invention makes use, for example, of standard Direct Access home banking applications, such as used in the Direct Access home banking method and system made known in co-pending U.S. Patent Application Serial No. 09/077,456, filed May 29, 1999, incorporated herein by this reference, on the banking application server 30 shown, for example, in Figs. 1 and 2. The home banking application generates HTML pages. Referring again, for example, to Figs. 1 and 2, the server 30 interacts with the transmission system 14 using standard HTTP protocols. Since the customer pages are presented as full size images on the television system 2, the pages can be full HTML pages. Two-way interaction between the user 12 and the banking system 30 is the same as with a normal Internet-based Direct Access implementation. The HTML pages are linked to the financial institution-controlled server 30 on the premises, for example, of the cell phone service company, using standard encrypted IP links. The financial institution server 30 is, in turn, connected to the cell phone transmitter 14, for example, for interaction with the intended cell phone 4. Session management is shared between the financial institution-controlled server 30 and the cell phone transmission system 14.

Referring further to Fig. 3, the choice of transmission technology used by the service company depends on the maturity of the service company's cell phone technology at the time of implementation. Wireless IP protocols are being developed to allow transmission of Internet packets over cell phone infrastructures. While third generation Wireless IP 24 is in the process of being implemented, second generation GSM for Wireless IP 22 is available, using circuit-switched transmission protocols. Second generation GSM 22 is relatively expensive, but system providers may have excess capacity for a number of years, in most places, and the capacity may be available on a marginal-pricing basis. However, Wireless IP in third Generation GSM 24 will be very close to true packet-based transmission. It will use wideband CDMA technology, in one form or another. Wireless IP should not be confused with WAPI, which is an interface allowing the delivery of pages to the cell phone itself for presentation on the 4x20 screen of the cell phone, nor with the Short Message System (SMS)-based information delivery which is possible using second generation GSM 22. SMS can serve as an alternative for the STB 4 or stand-alone STB 16, before the third generation infrastructure 24 is available.

In an embodiment of the present invention, the STB 4 makes use of transmitter-receiver 8, and the stand-alone STB 16 includes a transmitter-receiver 18, which accept Wireless IP sent to the cell phone identification (ID). The protocol for an embodiment of the present invention is, for example, third generation GSM 24 (or a successor to third generation GSM), with second generation GSM 22 as an alternative during the implementation of third generation GSM. For stand-alone STB 16, the transmitter-receiver 18 is contained within the stand-alone STB. The consumer user 12 registers the STB 4 or stand-alone STB 16 with the bank, and the STB or stand-alone STB uses Wireless IP protocols to receive packets under HTTP protocols. For the cell phone driven hybrid STB 4, the cell phone Wireless IP transmitter-receiver 8 is in the cell phone itself. HTML pages are delivered by the cell phone 8 to the STB 4, which has the same parsing and rendering functionality as the stand-alone STB 16. The cell phone keypad is the input device 11 to reduce cost, although, if appropriate, it can have an IR-driven keyboard. In an embodiment of the present invention, regular cell phone technology is used in the transmitter-receiver 8, 18. However, alternate transmission technologies can also be used in an embodiment of the present invention. For example, LEO 26, WiLL 28, two-way Cable can all be attached as an alternative, depending, for example, on cost effectiveness. In such an alternative, the appropriate transmitter-receiver is substituted for the cell phone transmitter-receiver 8, 18 for implementation.

An embodiment of the present invention makes use of software that is able to accept pages from the transmitter-receiver 8, 18 and pass them to the renderer 6, 20. The STB 4 or stand-alone STB 16 renders HTML pages on PAL screen format. The STB 4 or stand-alone STB 16 also includes a full function remote 11 including a keypad or a remote keyboard. An embodiment of the present invention also includes an end-to-end secure environment using, for example, the Subscriber Identification Module (SIM) Toolkit today on GSM, and a similar capability for third generation GSM 24. While the over-the-air portion may be secure, generation encryption is also provided for the rest of the system.

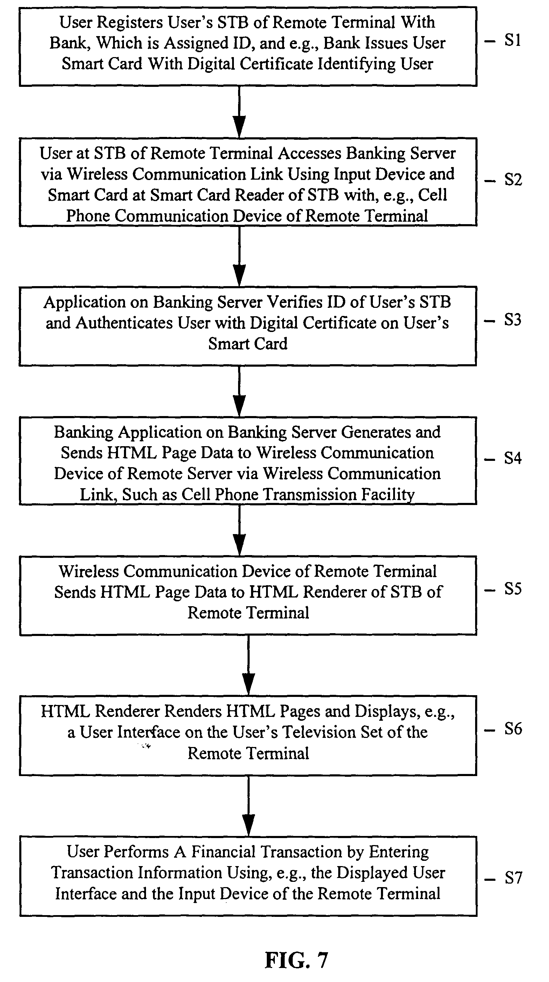

Fig. 7 is a flow chart that amplifies the flow of information shown, for example, in Figs. 3 and 4 and provides further detail regarding the process of performing a home banking transaction for an embodiment of the present invention. At S1, the user 12 registers the user's STB 4 or stand-alone STB 16 with a financial institution, such as a bank, or other service provider of any kind, and the user's STB or stand-alone STB is assigned an ID. The user 12 can also be issued a smart card 34 with a digital certificate that identifies the user. At S2, the user 12 at display device 2 of the remote terminal accesses the banking server 30 via cell phone transmission facility 14 using, for example, input device 11 and the user's smart card 34 in smart card reader 32 of STB 4 or stand-alone STB 16. At S3, an application, for example, on banking server 30, verifies the ID of the user's STB 4 or stand-alone STB 16 and authenticates the user 12 with the digital certificate on the user's smart card 34.

Referring further to Fig. 7, at S4, the home banking application on banking server generates and sends HTML page data to the wireless communication device 8 or 18 of the user's STB 4 or stand-alone STB 16, respectively, via the cell phone transmission facility 14. At S5, wireless communication device 8 or 18 sends the HTML page data to the HTML renderer 6 of the user's STB 4 or HTML renderer 20 of the user's stand-alone STB 16. At S6, the HTML renderer 6 or 20 renders the HTML pages, for example, on PAL screen format and displays, for example, a user interface on the user's television 2. At S7, the user 12 performs a financial transaction with the banking application on banking application server 30 using input device 11 coupled to STB 4 or stand-alone STB 16, interacting with cell phone transmitter 14, in turn linked to the banking server.

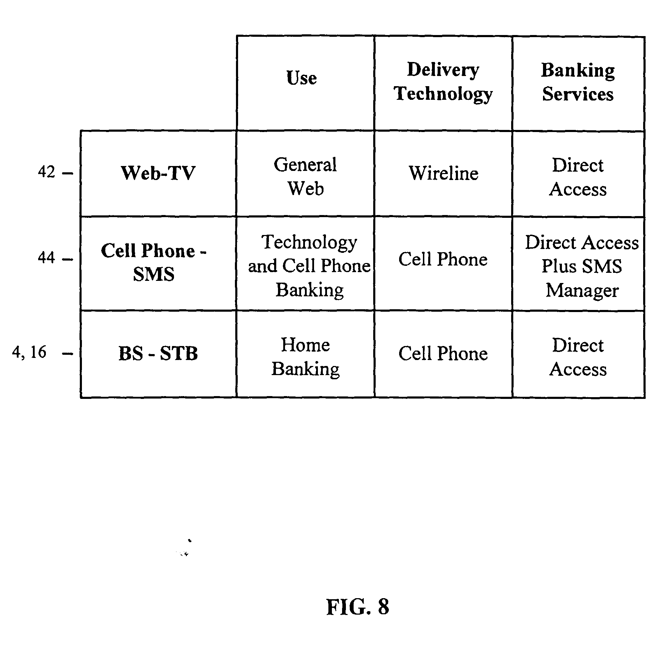

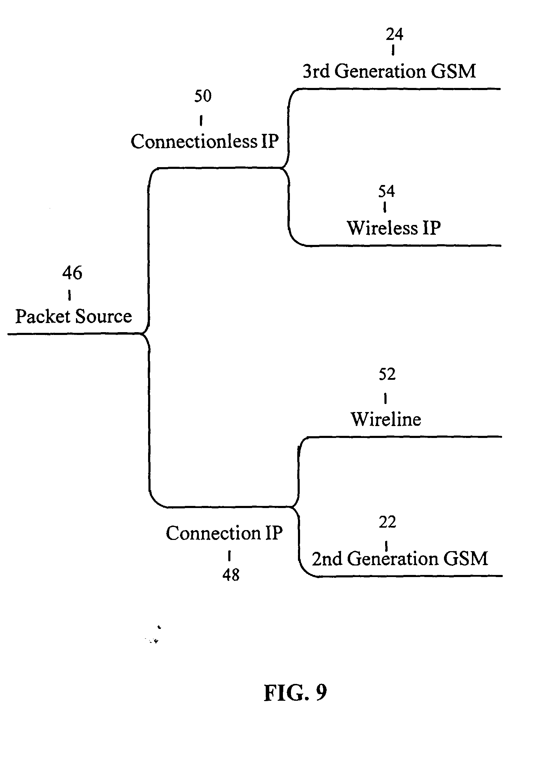

The method and system of an embodiment of the present invention provides significant advantages over other systems and methods for remote delivery of financial institution home banking. Fig. 8 is a table which illustrates examples of differences between other systems for remote delivery of financial institution home banking and the STB 4 or stand-alone STB 16 for an embodiment of the present invention. For example, Web-TV 42 for general web use can be used to deliver Direct Access banking services via wireline, Cell-Phone-SMS 44 for technology and cell phone banking can be used to deliver Direct Access Plus SMS Manager via cell phone, while the STB 4 or stand-alone STB 16 for an embodiment of the present invention for home banking is used to deliver Direct Access home banking via cell phone. Fig. 9 is a diagram which illustrates a sample taxonomy of various delivery technologies for remote delivery of home banking. For example, under Packet Source 46, is Connection IP 48 and Connectionless IP 50. Under Connection IP 48, is wireline 52 and second generation GSM 22, and under Connectionless IP 50, is third generation GSM 24 and Wireless IP 54.

If there are technologies or protocols that are used instead of or in addition to HTML, the embodiments of the present invention will be adapted to use the different technology or protocol.

Various preferred embodiments of the invention have been described in fulfillment of the various objects of the invention. It should be recognized that these embodiments are merely illustrative of the principles of the present invention. Numerous modifications and adaptations thereof will be readily apparent to those skilled in the art without departing from the spirit and scope of the present invention. Accordingly, the invention is only limited by the following claims.

## Claims

1. A method of performing a wireless transaction for a user at a remote terminal, comprising:
linking the remote terminal wirelessly to a server;
transmitting data for the user wirelessly between the server and the remote terminal;
automatically rendering a display for the user at the remote terminal from the transmitted data; and
performing a transaction for the user at the remote terminal using the rendered display.

2. The method of claim 1, wherein linking the remote terminal further comprises establishing a wireless communication link between the server and the remote terminal via a cell phone transmission facility.

3. The method of claim 2, wherein establishing the wireless communication link further comprises establishing the link between the server and a cell phone communication device of the remote terminal.

4. The method of claim 3, wherein establishing the wireless communication link further comprises establishing the link via at least one of a second generation GSM cell phone transmission facility and a third generation GSM cell phone transmission facility.

5. The method of claim 4, wherein establishing the link further comprises establishing the wireless communication link using Wireless IP.

6. The method of claim 5, wherein establishing the link further comprises establishing the wireless communication link using the Wireless IP which is connectionless.

7. The method of claim 3, wherein establishing the link further comprises authenticating the user at the remote terminal.

8. The method of claim 7, wherein authenticating the user further comprises authenticating the user with a digital certificate on a smart card for the user at the remote terminal.

9. The method of claim 8, wherein authenticating the user further comprises authenticating the user with the digital certificate on the smart card at a smart card reader coupled to the cell phone communication device of the remote terminal.

10. The method of claim 1, wherein linking the remote terminal further comprises establishing a wireless communication link between the server and the remote terminal via a satellite system.

11. The method of claim 10, wherein establishing the wireless communication link further comprises establishing the link via at least one of a LEO satellite system and a GeoStationary satellite system.

12. The method of claim 1, wherein linking the remote terminal further comprises establishing a wireless communication link between the server and the remote terminal via a WiLL system.

13. The method of claim 1, wherein transmitting the data further comprises transmitting the data between a financial institution-controlled server and the remote terminal.

14. The method of claim 13, wherein transmitting the data further comprises transmitting the data between a banking application on the server and the remote terminal.

15. The method of claim 14, wherein transmitting the data further comprises transmitting the data for a financial services transaction.

16. The method of claim 1, wherein transmitting the data further comprises transmitting the data via a cell phone transmission facility.

17. The method of claim 16, wherein transmitting the data further comprises transmitting the data via at least one of a second generation GSM cell phone transmission facility and a third generation GSM cell phone transmission facility.

18. The method of claim 17, wherein transmitting the data further comprises transmitting the data using a Wireless IP.

19. The method of claim 18, wherein transmitting the data further comprises transmitting the data using the Wireless IP which is connectionless.

20. The method of claim 1, wherein transmitting the data further comprises transmitting the data between the server and a cell phone communication device of the remote terminal.

21. The method of claim 20, wherein the cell phone communication device further comprises a standard cell phone.

22. The method of claim 1, wherein transmitting the data further comprises transmitting the data via a satellite system.

23. The method of claim 22, wherein transmitting the data further comprises transmitting the data via at least one of a LEO satellite system and a GeoStationary satellite system.

24. The method of claim 1, wherein transmitting the data further comprises transmitting the data via a wireless local loop system.

25. The method of claim 1, wherein automatically rendering the display further comprises automatically rendering the display of a user interface for the user.

26. The method of claim 25, wherein automatically rendering further comprises automatically rendering the display by an HTML renderer of the remote terminal.

27. The method of claim 26, wherein automatically rendering further comprises automatically sending the transmitted data to the HTML renderer by a wireless communication device of the remote terminal.

28. The method of claim 27, wherein the HTML renderer further comprises a set top box.

29. The method of claim 27, wherein the wireless communication device further comprises a cell phone communication device.

30. The method of claim 29, wherein the cell phone communication device further comprises a standard cell phone.

31. The method of claim 27, wherein the HTML renderer and the wireless communication device further comprises a stand-alone set top box.

32. The method of claim 27, wherein automatically rendering further comprises automatically rendering the display by the HTML renderer on a television set of the remote terminal.

33. The method of claim 32, wherein automatically rendering further comprises automatically rendering the display on the television set in PAL format for the user.

34. The method of claim 1, wherein performing the transaction further comprises entering transaction information by the user at the remote terminal with an input device of the remote terminal.

35. The method of claim 34, wherein entering the information further comprises entering the information with the input device linked to a wireless communication device of the remote terminal.

36. The method of claim 35, wherein the input device further comprises at least one of a keyboard, an IR driven keyboard, a mouse, an IR driven mouse, and a number pad of a standard cell phone.

37. The method of claim 35, wherein entering the information further comprises automatically sending the entered information for the user by the wireless communication device of the remote terminal to the server.

38. The method of claim 37, wherein automatically sending further comprises automatically sending the entered information to a financial institution-controlled server.

39. The method of claim 38, wherein automatically sending further comprises automatically sending the entered data to a financial services application on the server.

40. The method of 37, wherein automatically sending further comprises automatically transmitting the data via a wireless communication facility linked to the server.

41. The method of claim 40, wherein the wireless communication facility further comprises a cell phone transmission facility.

42. The method of claim 40, wherein the wireless communication facility further comprises a satellite system.

43. The method of claim 42, wherein the satellite system further comprises at least one of a LEO satellite system and a GeoStationary satellite system.

44. The method of claim 40, wherein the wireless communication facility further comprises a wireless local loop system.

45. The method of claim 34, wherein entering the information further comprises prompting the user to enter the information by the automatically rendered display of a user interface at the remote terminal.

46. The method of claim 45, wherein prompting the user further comprises prompting the user by the rendered display of the user interface on a television set of the remote terminal.

47. The method of claim 46, wherein prompting the user further comprises automatically displaying the user interface on the television set of the remote terminal by a financial services application on the server.

48. A system for performing a wireless transaction for a user at a remote terminal, comprising:
means for linking the remote terminal wirelessly to a server;
means for transmitting data for the user wirelessly between the server and the remote terminal;
means for automatically rendering a display for the user at the remote terminal from the transmitted data; and
means for performing a transaction for the user at the remote terminal using the rendered display.

49. The system of claim 48, wherein the means for linking the remote terminal wirelessly to the server further comprises a wireless communication facility linked to the server.

50. The system of claim 49, wherein the wireless communication facility further comprises a cell phone transmission facility.

51. The system of claim 49, wherein the wireless communication facility further comprises a satellite system.

52. The system of claim 51, wherein the satellite system further comprises at least one of a LEO satellite system and a GeoStationary satellite system.

53. The system of claim 49, wherein the wireless communication facility further comprises a wireless local loop system.

54. The system of claim 48, wherein the server further comprises a financial institution-controlled server.

55. The system of claim 54, wherein the financial institution-controlled server further comprises a banking application server.

56. The system of claim 48, wherein the means for transmitting the data wirelessly further comprises a wireless communication transmission facility linked to the server.

57. The system of claim 56, wherein the wireless communication transmission facility further comprises a cell phone transmission facility.

58. The system of claim 56 wherein the wireless communication transmission facility further comprises a satellite system.

59. The system of claim 58, wherein the satellite system further comprises at least one of a LEO satellite system and a GeoStationary satellite system.

60. The system of claim 56, wherein the wireless communication transmission facility further comprises a wireless local loop system.

61. The system of claim 48, wherein the means for transmitting the data wirelessly further comprises a cell phone communication device of the remote terminal.

62. The system of claim 61, wherein the cell phone communication device further comprises a standard cell phone.

63. The system of claim 61, wherein the cell phone communication device further comprises a stand-alone set top box.

64. The system of claim 63, wherein the stand-alone set top box further comprises an HTML renderer coupled to the cell phone communication device.

65. The system of claim 48, wherein the means for automatically rendering the display further comprises an HTML renderer of the remote terminal.

66. The system of claim 65, wherein the means for automatically rendering further comprises a wireless communication device of the remote terminal coupled to the HTML renderer.

67. The system of claim 66, wherein the HTML renderer further comprises a set top box.

68. The system of claim 66, wherein the wireless communication device further comprises a standard cell phone.

69. The system of claim 66, wherein the wireless communication device coupled to the HTML renderer further comprises a stand-alone set top box.

70. The system of claim 65, wherein the means for automatically presenting further comprises a television set coupled to the HTML renderer.

71. The system of claim 48, wherein the means for performing the transaction further comprises an input device of the remote terminal linked to a wireless communication device of the remote terminal.

72. The system of claim 71, wherein the input device further comprises at least one of a keyboard, an IR driven keyboard, a mouse, an IR driven mouse, and a number pad of a standard cell phone.

73. The system of claim 71, wherein the means for performing the transaction further comprises an HTML renderer of the remote terminal coupled to the wireless communication device.

74. The system of claim 73, wherein the means for performing the transaction further comprises a television set of the remote terminal coupled to the HTML renderer.
